(19)

**Europäisches Patentamt**
**European Patent Office**
**Office européen des brevets**

(11) **EP 1 777 249 B1**

(12) **EUROPÄISCHE PATENTSCHRIFT**

(45) Veröffentlichungstag und Bekanntmachung des Hinweises auf die Patenterteilung:
**18.02.2009 Patentblatt 2009/08**

(51) Int Cl.:
*C08J 5/18* (2006.01)     *C08J 7/04* (2006.01)
*B41M 5/52* (2006.01)

(21) Anmeldenummer: **06021386.5**

(22) Anmeldetag: **12.10.2006**

(54) **Verwendung einer haftvermittelnd beschichteten, biaxial orientierten Polyesterfolie zur Verarbeitung auf Digitaldruckmaschinen**

Use of a primer coated biaxially orientated polyester film for processing on digital printing maschines

Utilisation d'un film de polyester à orientation biaxiale ayant une couche primaire pour machines d'impression numériques

(84) Benannte Vertragsstaaten:
**DE FR GB LU**

(30) Priorität: **22.10.2005 DE 102005050758**
**22.02.2006 DE 102006008159**

(43) Veröffentlichungstag der Anmeldung:
**25.04.2007 Patentblatt 2007/17**

(73) Patentinhaber: **Mitsubishi Polyester Film GmbH**
**65203 Wiesbaden (DE)**

(72) Erfinder:
• **Jesberger, Martin, Dr.**
**55122 Mainz (DE)**
• **Kliesch, Holger, Dr.**
**65462 Ginsheim-Gustavsburg (DE)**
• **Hilkert, Gottfried, Dr.**
**55291 Saulheim (DE)**
• **Bartsch, Stefan, Dr.**
**65199 Wiesbaden (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A1- 1 114 733         EP-A2- 0 959 097**
**WO-A2-20/05108518        DE-A1- 10 035 328**
**US-A- 5 958 552          US-A- 6 114 021**
**US-A1- 2003 087 991      US-A1- 2004 076 844**

• **ANASTASIOS POLITIS: "Digital Printing - finishing technologies making digitally printed documents professional" GCA CONFERENCES XML EUROPE 2000, PARIS 2000, - Juni 2000 (2000-06) Gefunden im Internet: URL:http://www.infoloom.com/gcaconfs/WEB/paris2000/S23-04.HTM> [gefunden am 2008-07-10]**
• **MAEDA S; ET AL.: "DEVELOPMENT OF PAPER HAVING MICROPOROUS LAYER FOR DIGITAL PRINTING" JOURNAL OF IMAGING SCIENCE AND TECHNOLOGY, Bd. 44, Nr. 5, 1. September 2000 (2000-09-01), Seiten 410-417, XP000966249 VA, US**

**Beschreibung**

Die Erfindung betrifft die Verwendung einer biaxial orientierten Polyesterfolie zur Verarbeitung auf Digitaldruckmaschinen. Die erfindungsgemäße Folie besitzt mindestens eine Oberfläche, die eine gute Haftung zu Druckfarben, welche für den Digitaldruck, genauer das HP (Hewlett Packard) Indigo-Drucksystem, aufweist. Dazu wird diese Oberfläche mit einer wasserbasierten Dispersion zur Haftvermittlung in-line beschichtet. Die Erfindung betrifft weiterhin ein Verfahren für die Herstellung und Beschichtung der Folie und ihre Verwendung.

Biaxial orientierte Polyesterfolien sind bekannt.

Wässrige EAA-Copolymer (EAA = "ethylene acrylic acid")-Beschichtungsdispersionen sind ebenfalls bekannt.

In der EP-A-0 782 932 wird eine Beschichtung für lithographische Bedruckung von Plastikfolien beschrieben. Die acrylathaltige Beschichtung besteht dabei aus einem Blend aus EAA-Copolymer und zumindest einem Füllstoff wie beispielsweise Calciumcarbonat, Talk, Ton, Titandioxid und Mischungen dieser Füllstoffe. Weiterhin können darin Tenside und optional UV-Stabilisator enthalten sein.

In der US-A-5,430,111 werden Methoden zur Herstellung von wässrigen EAA-Dispersionen beschrieben. Die Carboxylatgruppen des EAA sind dabei vollständig mit Ammonium-, Natrium- oder Kaliumionen belegt. Diese Beschichtungsdispersionen eignen sich besonders als Haftvermittler für Druckfarben.

Die erwähnten Schriften beschreiben Dispersionen, welche für ein Off-line-coating auf Polyester prinzipiell geeignet sind. Hinweise auf die Eignung für ein In-line-coating, bei dem die Beschichtung zusammen mit der Folie in Querrichtung verstreckt wird, fehlen jedoch. Die beschriebenen Dispersionen sind in der Regel zu viskos, haben einen zu hohen Feststoffgehalt, und es fehlen Angaben zur optimalen Teilchengrößenverteilung. Weiterhin fehlen die Angaben zur idealen Oberflächenspannung, die für die Haftung von Electrolnk-Druckfarben für die Drucker der HP Indigo-Serie benötigt werden.

Aufgabe der Erfindung war die Bereitstellung von in-line beschichteten, biaxialen Polyesterfolien, die für den Digitaldruck geeignet sind. Die Anforderungen an die Beschichtung werden folgendermaßen gestellt:

- niedrige Feststoffkonzentration,
- gute Beschichtbarkeit und Verstreckbarkeit,
- verbesserte optische Eigenschaften (Verhinderung von Streifenbildung und Defekten in der Beschichtung),
- sehr gute Haftfestigkeit der Druckfarben auf der Beschichtung,
- scharfes Druckbild im Digitaldruck (HP indigo),
- lösungsmittelfreie Beschichtung,
- bessere Wirtschaftlichkeit,
- gute Lagerfähigkeit der beschichteten Folie.

Aufgabe der vorliegenden Erfindung war es daher, eine biaxial orientierte Polyesterfolie mit einem Haftvermittler bereitzustellen, die sich gegenüber den am Markt etablierten in-line und off-line beschichteten Polyesterfolien durch verbesserte optische Eigenschaften und insbesondere durch eine gute Haftung zu Druckfarben für den Digitaldruck (HP indigo), auszeichnet. Für die bessere Wirtschaftlichkeit und Umweltfreundlichkeit ist daher eine wässrige In-line-Beschichtung erwünscht.

Gelöst wird diese Aufgabe durch das In-line-Beschichten einer Polyesterfolie mit einer verdünnten wässrigen EAA-Copolymerdispersion. Innerhalb eines bestimmten Konzentrationsbereichs und bestimmter Teilchengröße der EAA-Partikel kann diese überraschenderweise streifenfrei auf die Polyesterfolie in-line aufgetragen werden und problemfrei zu einer homogenen dünnen Schicht verstreckt werden. Auf dieser so beschichteten Folie haften die Digitaldruckfarben (z. B. Electroink Serie 4,0 von HP) für Druckmaschinen der Serie HP indigo sehr gut und ergeben ein brillantes Druckbild.

Weitere Vorteile gegenüber dem Off-line-Verfahren sind:

- bessere Wirtschaftlichkeit;
- streifenfreie Aufbringung der Beschichtungslösung;
- wenn transparente Folien für teiltransparente Drucke benötigt werden, führen die geringeren Beschichtungsdicken der In-line-Beschichtung und der niedrige Feststoffgehalt zu einer geringeren Eigentrübung der Beschichtung im Vergleich zu off-line beschichteten Folien;
- besseres Druckbild

Das optische Erscheinungsbild des Digitaldrucks fällt dadurch im Vergleich brillanter aus.

Die Erfindung betrifft dementsprechend eine biaxial orientierte Polyesterfolie, wobei

a) zumindest eine der beiden Folienoberflächen eine haftvermittelnde Schicht trägt, die als wässrige Dispersion in-line auf die Folie aufgebracht ist,

b) die Oberflächenspannung der beschichteten Oberfläche kleiner als 40 mN/m und größer als 20 mN/m ist,

c) die Beschichtung für Druckfarben, insbesondere für Indigodruckfarben, geeignet ist, so dass sich eine gute Haftung der Farben und ein streifen-/defektfreies Druckbild ergibt,

d) die Dicke der Beschichtung kleiner/gleich 1000 nm und größer/gleich 5 nm ist.

Die Basisfolie ist entweder ein- oder mehrschichtig, wobei mehrschichtige Aufbauten bevorzugt sind.

Die Folie besteht zu mindestens 80 Gew.-%, bevorzugt zu mindestens 85 Gew.-% und besonders bevorzugt zu mindestens 90 Gew.-%, aus einem Polyester. Die verwendeten Polyester sind bekannt. Dafür geeignet sind unter anderem Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexan-dimethylenterephthalat, PCDT)] sowie aus Ethylenglykol, Naphthalin2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, insbesondere zu mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. anderen Dicarbonsäuren. Bevorzugt besteht die Basisschicht aus PET. Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuren besonders geeignet, wobei der Alkananteil geradkettig oder verzweigt sein kann.

Die Herstellung der Polyester kann z. B. nach dem bekannten Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Verbindungen bzw. Titansalzen polykondensiert, wobei die Verwendung von Titan-haltigen Katalysatoren bevorzugt ist. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Folie gemäß der Erfindung kann weiterhin anorganische oder organische Partikel, die zur Einstellung der Oberflächentopographie benötigt werden, enthalten. Die Menge der eingesetzten Partikel ist abhängig von den verwendeten Substanzen und ihrer Partikelgröße. Letztere liegt im allgemeinen im Bereich von 0,01 bis 30,0 $\mu$m, vorzugsweise 0,1 bis 5,0 $\mu$m und insbesondere 0,3 bis 3,5 $\mu$m.

Geeignete Verbindungen zur Erzielung der Rauheit sind z. B. Kalziumcarbonat, Apatit, Siliziumdioxid, Titandioxid, Aluminiumoxid, vernetztes Polystyrol, vernetztes PMMA, Zeolithe und andere Silikate und Aluminiumsilikate. Diese Verbindungen werden im Allgemeinen in Mengen von 0,05 bis 30 Gew.-%, vorzugsweise 0,1 bis 1 Gew.-%, eingesetzt (bezogen auf das Gewicht der Schicht, in der sie enthalten sind). Wenn weiße oder sehr trübe Folien hergestellt werden sollen, werden bis zu 30 Gew.-% Füllstoff (z. B. Bariumsulfat oder Titandioxid) benötigt (bezogen auf das Gewicht der Schicht, in der er enthalten ist).

Die erfindungsgemäße Folie weist eine Dicke zwischen 1 und 500 $\mu$m auf. Bevorzugt liegt die Dicke zwischen 6 und 300 $\mu$m und besonders bevorzugt zwischen 12 und 250 $\mu$m.

Die Basisfolie ist entweder ein- oder bevorzugt mehrschichtig. Die mehrschichtigen Folien bestehen aus einer Basisschicht B, mindestens einer Deckschicht A oder C und gegebenenfalls weiteren Zwischenschichten, wobei insbesondere ein dreischichtiger A-B-C-Aufbau bevorzugt ist.

Für die Deckschicht/en können die oben beschriebenen Rohstoffe der Basisschicht eingesetzt werden. Die Dicke der Deckschicht/en wird unabhängig von den anderen Schichten gewählt und liegt bevorzugt im Bereich von 0,1 bis 10 $\mu$m, insbesondere 0,2 bis 5 $\mu$m, vorzugsweise 1 bis 3 $\mu$m, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

In einer bevorzugten Ausführungsform ist die Basisfolie weiß, d. h. sie enthält zumindest ein weißfärbendes Pigment in einer Konzentration von 5 bis 20 Gew.-%, bevorzugt 6 bis 15 Gew.-%. Das Weißpigment ist bevorzugt entweder Titandioxid oder Bariumsulfat. Die Konzentration wird dabei erfindungsgemäß so gewählt, dass der Weißgrad der Folie (nach Berger) größer als 70 %, bevorzugt größer als 80 % und besonders bevorzugt größer als 85 % ist.

In einer weiteren bevorzugten Ausführungsform ist der Glanz der beschichteten Seite der erfindungsgemäßen Folie (gemessen nach DIN 67530) bei 20° größer als 70, bevorzugt größer als 100 und besonders bevorzugt größer als 150. In diesem Fall wird der Druck hochglänzend und besonders brillant. Diese Glanzwerte hängen von der Rauheit der Folie ab, auf die beschichtet wird. Diese sollte zweckmäßigerweise einen $R_a$ kleiner als 70 nm, bevorzugt kleiner als 50 nm und besonders bevorzugt kleiner als 40 nm aufweisen. Für ein akzeptables Wickelverhalten sollte die Rauheit $R_a$ mindestens 2 nm betragen.

In einer weiteren bevorzugten Ausführungsform liegt der Glanz der beschichteten Seite bei 20° kleiner als 40, bevorzugt kleiner als 30 und besonders bevorzugt kleiner als 20. In diesem Fall wird der Druck matt. Diese Glanzwerte hängen wiederum von der Rauheit der Folie ab, auf die beschichtet wird. Diese sollte zweckmäßigerweise einen $R_a$ größer als 100 nm, bevorzugt größer als 150 nm und besonders bevorzugt größer als 200 nm aufweisen.

Von großer Bedeutung für ein gutes Druckbild auf Druckern der HP Indigo-Serie ist die Streifen- bzw. Defektfreiheit der Beschichtung. Diese muss visuell beurteilt werden, da dies für die Endanwendung die besten Aussagen liefert. Hierzu wird die beschichtete Folie auf 30 cm Breite und 1 m Länge auf einer HP Indigopress-Maschine mit der Druckfarbe Electrolnk Mark 3.2 Black bedruckt. Es werden drei derartige Streifen hergestellt und in einem Abstand von 0,6 bis 1 m in den Winkeln zur Oberfläche von 25 und 75° betrachtet. Die Bestrahlung erfolgt mit einer handelsüblichen 60 Watt-Glühbirne, die einen Abstand von 1,5 m von der Folie hat. Die Folie ist streifenfrei, wenn visuell auf weniger als 2, bevorzugt auf keinem der getesteten Folienstreifen streifenartige Unregelmäßigkeiten einer Breite von mehr als 0,5 mm zu erkennen sind. Die Folie ist defektfrei, wenn auf weniger als 2, bevorzugt auf keinem der Folienstreifen visuell Unregelmäßigkeiten einer Größe von mehr als 0,5 x 0,5 mm zu erkennen sind.

Die Oberflächenspannung der mit der Druckfarben-Haftvermittlung beschichteten Seite der Folie ist größer als 20 mN/m und kleiner als 40 mN/m, bevorzugt größer als 24 mN/m und kleiner als 36 mN/m, besonders bevorzugt größer als 28 mN/m und kleiner als 32 mN/m.

Die Beschichtung wird in-line aufgebracht, d. h. während des Folienherstellprozesses, zweckmäßigerweise vor der Querstreckung. Besonders bevorzugt ist die Aufbringung mittels des "Reverse gravure-roll coating"-Verfahrens, wie es beispielsweise in der EP-A-0 769 540 beschrieben ist, bei dem sich die Beschichtung äußerst homogen auftragen lässt. Ebenfalls geeignet ist die Auftragung durch das Meyer-Rod-Verfahren, mit dem sich größere Beschichtungsstärken erzielen lassen. Die Beschichtung wird bevorzugt als wässrige Dispersion aufgetragen.

Die getrockneten Beschichtungen haben dann Schichtdicken von 5 bis 1000 nm, bevorzugt 10 bis 500 nm, besonders bevorzugt 20 bis < 500 nm, ganz besonders bevorzugt 20 bis < 200 nm, insbesondere 20 bis 100 nm.

Die wässrige Beschichtungsdispersion enthält mindestens 1 Gew.-% EAA (ethylene acrylic acid copolymer)-Partikel und nicht mehr als 20 Gew.-% EAA-Partikel. Bevorzugt mindestens 3 und nicht mehr als 15 Gew.-% EAA-Partikel und besonders bevorzugt mindestens 6 und nicht mehr als 11 Gew.-% EAA-Partikel.

Es hat sich als günstig erwiesen, wenn der $d_{0.5}$-Wert (Median der Partikelvolumenverteilung) der eingesetzten Partikel in den Dispersionen dabei zwischen 1 und 200 $\mu$m, bevorzugt zwischen 40 und 150 $\mu$m und besonders bevorzugt zwischen 60 und 80 $\mu$m liegt.

Es hat sich weiterhin als günstig erwiesen, wenn das Maximum der Partikel-Volumenverteilung der EAA-Partikel bei einer Partikelgröße zwischen 30 und 200 $\mu$m bzw. und besonders bevorzugt zwischen 40 und 90 $\mu$m liegt (s. Messmethoden).

Der pH-Wert der Dispersion liegt bevorzugt zwischen 7 und 10, besonders bevorzugt zwischen 8,5 und 9,5.

Die dynamische Viskosität der Dispersion (nach Höppler, DIN 53015) liegt bevorzugt zwischen 1 und 4 mPa·s und besonders bevorzugt zwischen 1,5 und 2,5 mPa·s. Ist die Viskosität der Dispersion größer als 6,5 mPa·s, ist sie für die In-line-Beschichtung nicht mehr geeignet.

Die bevorzugten Gegenionen zum EAA sind Ammonium-, Kalium- und Natriumionen. Besonders bevorzugt ist Natrium.

Die Dispersion kann weitere Komponenten wie Wachse, anorganische Partikel und Tenside enthalten, wobei der Anteil dieser Komponenten am Feststoffgehalt bevorzugt kleiner ist als der der EAA-Partikel.

Geeignete Dispersionen können beispielsweise von der Firma MICHELMAN, INC., 9080 Shell Road, Cincinnati, Ohio 45236-1299, USA, bezogen werden. Geeignet ist beispielsweise die Dispersion DP-4430. Anders als in den Instruktionen von Michelman empfohlen muss diese Dispersion jedoch mindestens 50 % mit dest. Wasser verdünnt werden, um für das In-line-Coating geeignet zu sein.

**Herstellungsverfahren**

Gegenstand der vorliegenden Erfindung ist auch ein Verfahren zur Herstellung der erfindungsmäßen Folien. Es umfasst

- das Bereitstellen einer einschichtigen Polyesterfolie oder
- das Bereitstellen einer mehrschichtigen Folie aus einer Basisschicht (B) und Deckschicht(en) A (und C), hergestellt durch Koextrusion und Ausformen der Schmelzen zu flachen Schmelzefilmen,
- Beschichten der Folie mit einer wässrigen Beschichtungszusammensetzung, die 1 bis 20 Gew.-%, bezogen auf das Gesamtgewicht der Zusammensetzung, an EAA (ethylene acrylic acid copolymer)-Partikeln mit einer mittleren Partikelgröße ($d_{50}$-Wert) von 1 bis 200 $\mu$m enthält, wobei die Beschichtung vorzugsweise zwischen dem ersten und dem zweiten Streckschritt aufgetragen wird, und
- biaxiales Strecken der Folie und Thermofixieren der gestreckten Folie.

Zunächst wird das Polymer bzw. die Polymermischung der einzelnen Schichten in einem Extruder komprimiert und verflüssigt. Die Schmelzen werden gleichzeitig durch eine Breitschlitzdüse gepresst, und die ausgepresste mehrschichtige Folie wird auf einer oder mehreren Abzugswalzen abgezogen, wobei sie abkühlt und sich verfestigt.

Die biaxiale Verstreckung wird im Allgemeinen sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Verstreckung kann auch simultan durchgeführt werden, wobei die Beschichtung dann vor dem Rahmen, also vor der Längs- und Querstreckung, aufgebracht wird. Die Antragsstärken müssen dann entsprechend höher gewählt werden, um die erfindungsgemäßen Trockenschichtdicken zu erreichen. Es hat sich dabei als günstig erwiesen, wenn das Flächenstreckverhältnis (längs mal quer) kleiner als 25 und bevorzugt kleiner als 18 ist. Das Flächenstreckverhältnis sollte jedoch größer als 9 sein.

Die Temperatur, bei der die biaxiale Verstreckung von PET im allgemeinen durchgeführt werden kann, kann in einem relativ großen Bereich variieren und richtet sich nach den gewünschten Eigenschaften der Folie. Die Längsstreckung wird im allgemeinen bei ca. 80 bis 140 °C und die Querstreckung bei ca. 80 bis 150 °C durchgeführt. Das Längsstreckverhältnis $\lambda_{MD}$ liegt dabei im Bereich von 2,0:1 bis 5:1. Das Querstreckverhältnis $\lambda_{TD}$ liegt im Allgemeinen im Bereich von 2,5:1 bis 5,0:1. Vor der Querstreckung wird erfindungsgemäß eine oder beide Oberflächen der Folie nach den bekannten Verfahren in-line beschichtet.

Bei der nachfolgenden Thermofixierung wird die Folie etwa 0,1 bis 10 s lang bei einer Temperatur von ca. 150 bis 250 °C gehalten. Anschließend wird die Folie in üblicher Weise aufgewickelt.

Es hat sich dabei als günstig erwiesen, wenn die maximale Temperatur in der Thermofixierung mindestens 210 °C, bevorzugt sogar mindestens 220 °C und besonders bevorzugt sogar mindestens 230 °C beträgt. Wenn die beschichtete Folie diesen Temperaturbereich erreicht, dann reduziert sich der Rückseitentransfer der Beschichtung deutlich. Wenn geringere Temperaturen eingestellt werden, kann es zu einem Abklatschen von Teilen der Beschichtung auf die nicht beschichtete Rückseite kommen. Ob die Folie diesen Temperaturbereich erreicht hat, lässt sich am leichtesten über die Bestimmung eines zweiten endothermen Peaks oberhalb von 200 °C unterhalb des Schmelzpeaks mittels DSC (digital scanning calometrie) ermitteln. Diese Methode ist in EP-A-0 620 245 beschrieben. Es hat sich als günstig erwiesen, wenn dieser Peak bei einer Temperatur größer als 205 °C, bevorzugt größer als 215 °C und besonders bevorzugt größer als 225 °C auftritt.

Es hat sich weiterhin als günstig erwiesen, wenn der Schrumpf der Folie bei 150 °C und 15 min in Querrichtung kleiner ist als 1,5 %, bevorzugt kleiner als 1 % und besonders bevorzugt kleiner als 0,8 %. Der Schrumpf in Längsrichtung (Maschinenrichtung) sollte günstigerweise < 2 %, bevorzugt < 1,6 % und besonders bevorzugt < 1,3 %, sein. Es ist günstig, wenn der Schrumpf in keiner Folienrichtung bei 150 °C und 15 min größer als -0,6 % (Längung) ist, bzw. noch günstiger, wenn der Schrumpf größer als -0,3 % ist. Zum Erreichen dieser Schrumpfwerte sollte in der Thermofixierung eine Relaxation von mindestens 1 % eingestellt werden. Die Schrumpfcharakteristik garantiert, dass das Druckbild auch nach Lagerung bzw. thermischer Belastung erhalten bleibt und nicht verschwimmt.

Die erfindungsgemäße ein- oder beidseitig beschichtete Folie zeigt nach dem Bedrucken ein defektfreies Druckbild und ein sehr gutes Verarbeitungsverhalten (d. h. keine Transportprobleme in den Druckmaschinen, kein erkennbarer Abrieb der Druckfarben, keine Abrisse). Sie zeichnet sich durch ein hervorragendes Druckbild bei Verwendung von Farben für die Indigo-Druckerserie von HP im digitalen Druck aus. Die erfindungsgemäßen beschichteten Folien eignen sich als Verpackungsmaterial für Nahrungs- und Genussmittel, z. B. für individualisierte Werbedrucke im Verpackungsbereich, für Etiketten und für Karten wie beispielsweise Bank- und ID-Karten mit Sicherheitsmerkmalen.

Die Folie eignet sich auf Grund ihres sehr guten Handlings und ihrer sehr guten Verarbeitungseigenschaften insbesondere für die Verarbeitung auf Digitaldruckmaschinen wie beispielsweise auf einer HP Indigo Press ws4000 / ws4050 und HP Indigo Press s2000 der Fa. HP, Maastricht, NL. Die bedruckten erfindungsgemäßen Folien haben ein sehr attraktives, werbewirksames Aussehen.

Bei der Herstellung der Folie ist gewährgeleistet, dass das Regenerat, das z. B. als Verschnitt bei der Folienherstellung anfällt, in einer Konzentration von ca. 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden. Insbesondere der Gelbzahlanstieg war gering (s. Messmethoden).

Zur Charakterisierung der Rohstoffe und der Folien wurden die folgenden Messmethoden benutzt:

DIN = Deutsches Institut für Normung
ASTM = American Society for Testing and Materials

### Gelbzahl

Die Gelbzahl der Folie wird nach ASTM D 1925-70 mittels eines Spektralphotometers Typ Lamda 12 der Firma Perkin Elmer (USA), Normlichtart D65, 10°-Normalbeobachter bestimmt. Aus den gemessenen Normfarbwerten X, Y, Z erfolgt die Berechnung der Gelbzahl YI gemäß der Gleichung

$$YI = [100 \cdot (1{,}28 \cdot X - 1{,}06 \cdot Z)] / Y$$

### Bestimmung der Regenerierbarkeit

100 kg beschichtete Folie der Dicke 50 $\mu$m werden gehäckselt, 2 Stunden bei 145 °C getrocknet und in einem Zweischneckenextruder aufgeschmolzen und bei 285 °C durch eine Lochdüse extrudiert. Der Strang wird granuliert und aus dem Granulat wie unten beschrieben erneut eine 50 $\mu$m Folie hergestellt. Die Gelbzahl der beschichteten Folie wird mit der Gelbzahl der aus dem Regenerat hergestellten Folie verglichen. Wenn der Anstieg unter 50 % liegt ist die Regenerierbarkeit gut.

### Dynamische Viskosität nach Höppler (Kugelfallviskosimeter)

Die Dynamische Viskosität der Beschichtungs-Dispersionen wird analog DIN Norm 53015 "Messung der Viskosität mit dem Kugelfallviskosimeter nach Höppler" bestimmt. Die Beschichtungsdispersionen werden vor der Messung auf 20 °C temperiert.

### $d_{0{,}5}$-Teilchengrößenverteilung

Die Partikelgrößenverteilung wird an den Beschichtungsdispersionen mit einem Mastersizer der Firma Malvern Instruments Ltd., UK, (Malvern Mastersizer 2000 Version 5.10 G) bestimmt. Der Messbereich wird mit 0,02 bis 2000 $\mu$m eingestellt. Es wird die Volumenanteil in % gegen die Partikelgröße in $\mu$m aufgetragen. Der $d_{0{,}5}$-Wert gibt den Median der Partikelvolumenverteilung an (Auswertung mittels der Malvern Mastersizer 2000 Version 5.10 G Software). Das Maximum der Partikel-Volumenverteilung der EAA-Partikel gibt das größte lokale Maximum in der oben genannten Auftragung von Volumenanteil in Prozent gegen Partikelgröße bei einer Partikelgröße zwischen 30 und 200 $\mu$m an.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos.

### Oberflächenspannung

Die Oberflächenspannung (Surface free energy) wurde aus den Kontaktwinkeln mittels der Owens-Wendt-Rabel-Kaelble-Methode berechnet. Als Testflüssigkeiten dienen Wasser, 1,5-Pentandiol und Dijodmethan. Die Bestimmung der Kontaktwinkel erfolgte mittels eines DSA-100-Messgerätes der Firma Krüss GmbH, DE. Die Auswertung nach Owens-Wendt-Rabel-Kaelble erfolgte mittels der zum Gerät gehörenden DSA-Software (Stand 2005). Für 1,5-Pentandiole wurden Werte für den polaren und dispersen Anteil nach Gebhardt übernommen, für Wasser und Dijodmethan Werte nach Ström.

|  | IFT in mN/m | dispers in mN/m | polar in mN/m |
|---|---|---|---|
| Wasser | 72,8 | 21,8 | 51 |
| 1,5-Pentandiol | 43,3 | 27,6 | 15,7 |
| Dijodmethan | 50,8 | 50,8 | 0 |

**Weißgrad**

Der Weißgrad wird nach Berger bestimmt, wobei mehr als 20 Folienlagen aufeinander gelegt werden. Die Bestimmung des Weißgrades erfolgt mit Hilfe des elektrischen Remissionsphotometers ELREPHO der Firma Zeiss, Oberkochem, DE, Normlichtart C, 2°-Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weißstandard wird ein Pressling aus Bariumsulfat (DIN 5033, Teil 9) verwendet. Eine ausführliche Beschreibung ist z. B. in Hansl Loos, Farbmessung, Verlag Beruf und Schule, Itzehoe (1989) beschrieben.

**Farbhaftfestigkeit**

Nach dem Bedrucken mit Indigofarben wurde die Farbhaftfestigkeit ermittelt. Dazu werden die biaxial orientierten Polyesterfolien mit den Grundfarben des Indigodrucksystems beschichtet (Electroink Cyan, Magenta, Yellow and Black auf HP Indigo press WS4050). Nach der Trocknung von jeweils 15 Minuten, einer Stunde und einem Tag bei Raumtemperatur wird ein handelsüblicher Klebefilmstreifen Type Tesa-Film kristall-klar (Typ 57330, Breite 19 mm, Länge der Rolle 33 m) der Fa. Tesa AG, DE, auf die bedruckte Seite aufgeklebt (10 cm Länge) und zehnmal mit einer 1 kg schweren Rolle auf- und abgefahren. Nach dem Abziehen des Klebebands von der beschichteten und bedruckten Folie wird die Adhäsion der Grundfarben zur Folie ermittelt. Die Beurteilung erfolgt visuell.

+ Sehr gute Adhäsion aller Grundfarben des Indigofarbsystems zur biaxial orientierten Polyesterfolie, Nach 15 Minuten bereits konnte auf dem abgezogenen Tesafilmstreifen keine Farbe erkannt werden.
- Schlechte Adhäsion. Nach 15 Minuten wird ein Großteil der Farbe abgelöst. Nach einer Stunde verbleiben ein Großteil bzw. die komplette Farbe auf dem Polyester.
-- Sehr schlechte Adhäsion. Nach jeweils 15 Minuten und einer Stunde wird ein Großteil der Farbe abgelöst.

**Beschichtungsqualität**

Die Beurteilung der Beschichtungsqualität erfolgt visuell. Hierzu wird die beschichtete Folie auf 30 cm Breite und 1 m Länge auf einer HP Indigopress-Maschine mit der Druckfarbe Electrolnk Mark 3.2 Black bedruckt. Es werden drei derartige Streifen hergestellt und in einem Abstand von 0,6 bis 1 m in den Winkeln zur Oberfläche von 25 und 75° betrachtet. Die Bestrahlung erfolgt mit einer handelsüblichen 60 Watt-Glühbirne, die einen Abstand von 1,5 m von der Folie hat. Die Anzahl der Folienstreifen, die streifenartige Unregelmäßigkeiten einer Breite von mehr als 0,5 mm aufweisen, wird bewertet. Für die Defektfreiheit werden die Streifen mit Unregelmäßigkeiten, die einer Größe von mehr als 0,5 x 0,5 mm aufweisen, gezählt.
Streifen und Unregelmäßigkeiten werden separat bewertet.

+ Gute Qualität: Keine erkennbaren Streifen oder Unregelmäßigkeiten
0 Akzeptable Qualität: Erkennbare Unregelmäßigkeiten oder Streifen auf einem Folienstreifen.
- Schlechte Qualität: Erkennbare Unregelmäßigkeiten oder Streifen auf mehr als einem Folienstreifen.

**Rauigkeit**

Die Rauigkeit $R_a$ der Folie wurde nach DIN 4768 bei einem Cut-off von 0,25 mm bestimmt.

**Schrumpf**

Der thermische Schrumpf wurde an quadratischen Folienmustern mit einer Kantenlänge von 10 cm bestimmt. Die Proben werden genau ausgemessen (Kantenlänge $L_0$) und werden 15 min bei 150 °C in einem Umlufttrockenschrank getempert. Die Proben werden entnommen und bei Raumtemperatur genau ausgemessen (Kantenlänge L). Der Schrumpf ergibt sich aus der Gleichung

$$\text{Schrumpf } [\%] = 100 * (L_0 - L) / L$$

**Folienherstellung**

Die Chips wurden entsprechend den angegebenen Mischungsverhältnissen gemischt. Die Chips für die Basisschicht B wurden in einem Schachttrockner bei 120 °C für 3 h getrocknet. Die Chips wurden in dem jeweiligen Extruder für die entsprechende Schicht (Deckschichten A und C Doppelschneckenextruder; Basis B Einschneckenextruder) aufgeschmolzen und durch eine Flachdüse coextrudiert. Die Folie wurde anschließend in Maschinenrichtung bei 122 °C um den Faktor 3,8 längsgestreckt. Die längsgestreckte Folie wurde coronabehandelt (8 kW/m) und danach durch Reversgravurbeschichtung auf der C-Schicht mit der jeweiligen Beschichtungsdispersion beschichtet.

Anschließend wurde die Folie bei 110 °C um den Faktor 3,5 quergestreckt und 2 s bei 235 °C thermofixiert und bei 200 °C um 3 % in Querrichtung relaxiert. Die Länge des Rahmens betrug 15 m und die Maschinengeschwindigkeit 150 m/min.

**Beispiel 1**

Folienherstellung wie oben beschrieben. Endfoliendicke 250 $\mu$m.
Dicke Basisschicht 200 $\mu$m, Deckschichten A und C jeweils 25 $\mu$m.

Basisschicht (B):

| | |
|---|---|
| 86 Gew.-% | Polyethylenterephthalat mit einem SV-Wert von 800 |
| 14 Gew.-% | Masterbatch der Fa. Sukano (Schindellegi, CH) mit 50 Gew.-% Titandioxid (mittlerer Teilchendurchmesser Titandioxid ca. 0,3 $\mu$m), Rest Polyethylenterephthalat |

Deckschicht (A), Mischung aus:

| | |
|---|---|
| 70 Gew.-% | Polyethylenterephthalat mit einem SV-Wert von 800 |
| 14 Gew.-% | Masterbatch der Fa. Sukano (Schindellegi, CH) mit 50 Gew.-% Titandioxid (mittlerer Teilchendurchmesser Titandioxid ca. 0,3 $\mu$m), Rest Polyethylenterephthalat |
| 16 Gew.-% | Masterbatch aus 99 Gew.-% Polyethylenterephthalat (SV-Wert von 800) und 1 Gew.-% ®Sylobloc 44 H (synthetisches $SiO_2$ der Fa. Grace, Durchmesser = 2,5 $\mu$m) |

Deckschicht (C), Mischung aus:

| | |
|---|---|
| 94 Gew.-% | Polyethylenterephthalat mit einem SV-Wert von 800 |
| 6 Gew.-% | Masterbatch der Fa. Sukano (Schindellegi, CH) mit 50 Gew.-% Titandioxid (mittlerer Teilchendurchmesser Titandioxid ca. 0,3 $\mu$m), Rest Polyethylenterephthalat |

Beschichtungsdispersion:

Die 4 Volumenteile Beschichtungsdispersion Digiprime DP4430 der Firma Michelman Inc., USA, werden mit 6 Teilen destilliertem Wasser gemischt. pH-Wert der Beschichtungsdispersion = 8,8. $d_{0.5}$ = 1,4 $\mu$m. Maximum der

Partikel-Volumenverteilung der EAA-Partikel = 51 $\mu$m. Viskosität der Dispersion = 1,8 mPa·s.

Das Trockengewicht der Beschichtung betrug 0,035 g/m$^2$ bei einer Trockenbeschichtungsdicke von 0,03 $\mu$m.

Der Schrumpf bei 150 °C und 15 min betrug 0,9 % in Maschinenrichtung und 0,1 % in Querrichtung. Der Weißgrad betrug 85 % auf der beschichteten Seite. Die Farbhaftung (Farbfestigkeit) war sehr gut. Beurteilung hinsichtlich Streifen und Beschichtungsunregelmäßigkeiten war gut (+).

Die Oberflächenspannung der beschichteten Seite lag bei 31 mN/m.

**Beispiel 2**

Folienherstellung wie oben beschrieben. Endfoliendicke 25 $\mu$m.
Dicke Basisschicht 19 $\mu$m, Deckschichten A und C jeweils 3 $\mu$m.

Basisschicht (B):

100 Gew.-%     Polyethylenterephthalat mit einem SV-Wert von 800

Deckschicht (A), Mischung aus:

95 Gew.-%     Polyethylenterephthalat mit einem SV-Wert von 800
5 Gew.-%     Masterbatch aus 99 Gew.-% Polyethylenterephthalat (SV-Wert von 800) und 1 Gew.-% ®Sylobloc 44 H
(synthetisches SiO$_2$ der Fa. Grace, Durchmesser = 2,5 $\mu$m)

Deckschicht (C), Mischung aus:

20 Gew.-%     Polyethylenterephthalat mit einem SV-Wert von 800
80 Gew.-%     Masterbatch aus 98 Gew.-% Polyethylenterephthalat (SV-Wert von 800) und 2 Gew.-% ®Sylysia 430
(synthetisches SiO$_2$ der Fa. Fuji)

Beschichtungsdispersion:

4 Volumenteile Beschichtungsdispersion Digiprime DP4430 der Firma Michelman Inc., USA, werden mit 6 Teilen destilliertem Wasser gemischt. pH-Wert der Beschichtungsdispersion = 8,8. d$_{0,5}$ = 1,4 $\mu$m. Maximum der Partikel-Volumenverteilung der EAA-Partikel = 51 $\mu$m. Viskosität der Dispersion = 1,8 mPa·s.

Das Trockengewicht der Beschichtung betrug 0,035 g/m$^2$ bei einer Trockenbeschichtungsdicke von 0,03 $\mu$m.

Der Schrumpf bei 150 °C und 15 min betrug 1,2 % in Maschinenrichtung und 0,5 % in Querrichtung. Der Glanz (20°) betrug 19 auf der beschichteten Seite. Der R$_a$-Wert betrug 250 nm. Die Farbhaftung war sehr gut. Beurteilung hinsichtlich Streifen und Beschichtungsunregelmäßigkeiten war gut (+).

Die Oberflächenspannung der beschichteten Seite lag bei 32 mN/m.
Die Regenerierbarkeit war gut.

**Beispiel 3**

Folienherstellung wie oben beschrieben. Endfoliendicke 15 $\mu$m.
Dicke Basisschicht 11 $\mu$m, Deckschichten A und C jeweils 2 $\mu$m.

Basisschicht (B):

100 Gew.-%     Polyethylenterephthalat mit einem SV-Wert von 800

Deckschicht (A), Mischung aus:

| 95 Gew.-% | Polyethylenterephthalat mit einem SV-Wert von 800 |
| 5 Gew.-% | Masterbatch aus 99 Gew.-% Polyethylenterephthalat (SV-Wert von 800) und 1 Gew.-% Sylobloc 44 H (synthetisches $SiO_2$ der Fa. Grace, Durchmesser = 2,5 $\mu$m) |

Deckschicht (C), Mischung aus:

| 95 Gew.-% | Polyethylenterephthalat mit einem SV-Wert von 800 |
| 5 Gew.-% | Masterbatch aus 99 Gew.-% Polyethylenterephthalat (SV-Wert von 800) und 1 Gew.-% Sylobloc 44 H (synthetisches $SiO_2$ der Fa. Grace, Durchmesser = 2,5 $\mu$m) |

Beschichtungsdispersion:

4 Volumenteile Beschichtungsdispersion Digiprime DP4430 der Firma Michelman Inc., USA, werden mit 6 Teilen destilliertem Wasser gemischt. pH-Wert der Beschichtungsdispersion = 8,8. $d_{0.5}$ = 1,4 $\mu$m. Maximum der Partikel-Volumenverteilung der EAA-Partikel = 51 $\mu$m. Viskosität der Dispersion = 1,8 mPa·s.
Das Trockengewicht der Beschichtung betrug 0,035 g/m² bei einer Trockenbeschichtungsdicke von 0,03 $\mu$m.
Der Schrumpf bei 150 °C und 15 min betrug 1,5 % in Maschinenrichtung und 0,9 % in Querrichtung. Der Glanz (20°) betrug 159 auf der beschichteten Seite. Der $R_a$-Wert betrug 25 nm. Die Farbhaftung war sehr gut. Beurteilung hinsichtlich Streifen und Beschichtungsunregelmäßigkeiten war gut (+).
Die Oberflächenspannung der beschichteten Seite lag bei 30 mN/m.
Die Regenerierbarkeit war gut.

**Vergleichsbeispiel 1**

Folie wie Beispiel 3, aber keine Beschichtung.
Der Schrumpf bei 150 °C und 15 min betrug 1,5 % in Maschinenrichtung und 0,9 % in Querrichtung. Der Glanz (20°) betrug 170 auf der C-Seite. Der $R_a$-Wert betrug 23 nm. Die Farbfestigkeit war sehr schlecht (--). Beurteilung hinsichtlich Streifen und Beschichtungsunregelmäßigkeiten war schlecht (-).

**Vergleichsbeispiel 2**

Folie wie Beispiel 3, aber andere Beschichtung.

Beschichtungsdispersion:

8 Volumenteile Beschichtungsdispersion ®Digiprime DP4430 der Firma Michelman Inc., USA, werden mit 2 Teilen destilliertem Wasser gemischt. pH-Wert der Beschichtungsdispersion = 8,4. $d_{0.5}$ = 1,4 $\mu$m. Maximum der Partikel-Volumenverteilung der EAA-Partikel = 51 $\mu$m. Viskosität der Dispersion = 12 mPa·s.
Der Schrumpf bei 150 °C und 15 min betrug 1,5 % in Maschinenrichtung und 0,9 % in Querrichtung. Der Glanz (20°) betrug 140 auf der C-Seite. Der $R_a$-Wert betrug 31 nm. Die Farbfestigkeit war sehr schlecht (-). Beurteilung hinsichtlich Streifen und Beschichtungsunregelmäßigkeiten war schlecht (-).

**Vergleichsbeispiel 3**

Folie wie Beispiel 3, aber andere Beschichtung = Beschichtungsdispersion Digiprime DP4430 der Firma Michelman Inc., USA, unverdünnt.
Eine Beschichtung war nicht mit akzeptabler Qualität möglich. Die Beschichtung war schon nach dem Antragswerk unregelmäßig und aufgerissen und nach der Verstreckung visuell erkennbar unregelmäßig auf der Folienoberfläche verteilt. Es kam zu vermehrten Folienabrissen in der Querstreckung.

**EP 1 777 249 B1**

**Patentansprüche**

1. Verwendung einer in-line beschichteten, biaxial orientierten Polyesterfolie, die auf mindestens einer Oberfläche eine Beschichtung aus dem getrockneten Überrest einer wässrigen Beschichtungszusammensetzung aufweist, wobei die wässrige Beschichtungszusammensetzung EAA (ethylene acrylic acid copolymer)-Partikel enthält, zur Verarbeitung auf Digitaldruckmaschinen.

2. Verwendung nach Anspruch 1, **dadurch gekennzeichnet, dass** die Oberflächenspannung der beschichteten Oberfläche kleiner als 40 mN/m ist.

3. Verwendung nach Anspruch 1 oder 2, **dadurch gekennzeichnet, dass** die Dicke der getrockneten Beschichtung kleiner als 1 $\mu$m ist.

4. Verwendung nach einem der Ansprüche 1 bis 3, **dadurch gekennzeichnet, dass** die Gegenionen zum EAA ausgewählt sind aus Ammonium-, Kalium- und Natriumionen.

5. Verwendung nach einem der Ansprüche 1 bis 4, **dadurch gekennzeichnet, dass** die Folie weiß ist und der Weißgrad der Folie (nach Berger) größer als 70 % ist.

6. Verwendung nach einem der Ansprüche 1 bis 5, **dadurch gekennzeichnet, dass** der Glanz der beschichteten Seite (gemessen nach DIN 67530) der Folie bei 20° größer als 70 ist.

7. Verwendung nach Anspruch 6, **dadurch gekennzeichnet, dass** die beschichtete Oberfläche einen $R_a$-Wert von kleiner als 70 nm aufweist.

8. Verwendung nach einem der Ansprüche 1 bis 7, **dadurch gekennzeichnet, dass** der Glanz der beschichteten Seite (gemessen nach DIN 67530) bei 20° kleiner als 40 ist.

9. Verwendung nach Anspruch 8, **dadurch gekennzeichnet, dass** die beschichtete Oberfläche einen $R_a$-Wert von größer als 100 nm aufweist.


**Claims**

1. The use of an in-line coated, biaxially oriented polyester film, at least one surface of which has a coating composed of the dried residue of an aqueous coating composition, where the aqueous coating composition comprises EAA (ethylene-acrylic acid copolymer) particles, for processing on digital printing machines.

2. The use as claimed in claim 1, wherein the surface tension of the coated surface is smaller than 40 mN/m.

3. The use as claimed in claim 1 or 2, wherein the thickness of the dried coating is smaller than 1 $\mu$m.

4. The use as claimed in any of claims 1 to 3, wherein the counterions for the EAA have been selected from ammonium, potassium, and sodium ions.

5. The use as claimed in any of claims 1 to 4, wherein the film is white and the (Berger) whiteness of the film is greater than 70 %.

6. The use as claimed in any of claims 1 to 5, wherein the gloss of the coated side (measured to DIN 67530) of the film at 20 ° is greater than 70.

7. The use as claimed in claim 6, wherein the $R_a$ value of the coated surface is smaller than 70 nm.

8. The use as claimed in any of claims 1 to 7, wherein the gloss of the coated side (measured to DIN 67530) at 20 ° is smaller than 40.

9. The use as claimed in claim 8, wherein the $R_a$ value of the coated surface is greater than 100 nm.

**EP 1 777 249 B1**

**Revendications**

1. Utilisation d'une feuille de polyester revêtue en ligne, orientée biaxialement, qui comporte sur au moins une surface un revêtement à base d'un matériau obtenu par séchage d'une composition aqueuse de revêtement, la composition aqueuse de revêtement contenant des particules d'EAA (copolymère éthylène acide acrylique), pour une mise en oeuvre sur des machines d'impression numérique.

2. Utilisation selon la revendication 1, **caractérisée en ce que** la tension superficielle de la surface revêtue est inférieure à 40 mM/m.

3. Utilisation selon la revendication 1 ou 2, **caractérisée en ce que** l'épaisseur du revêtement séché est inférieure à 1 $\mu$m.

4. Utilisation selon l'une quelconque des revendications 1 à 3, **caractérisée en ce que** les contre-ions à l'EAA sont choisis parmi les ions ammonium, potassium et sodium.

5. Utilisation selon l'une quelconque des revendications 1 à 4, **caractérisée en ce que** le film est blanc et **en ce que** le degré de blancheur du film (selon Berger) est supérieur à 70 %.

6. Utilisation selon l'une quelconque des revendications 1 à 5, **caractérisée en ce que** le brillant de la face revêtue (mesuré selon DIN 67530) du film sous 20° est supérieur à 70.

7. Utilisation selon la revendication 6, **caractérisée en ce que** la surface revêtue présente une valeur $R_a$ inférieure à 70 nm.

8. Utilisation selon l'une quelconque des revendications 1 à 7, **caractérisée en ce que** le brillant de la face revêtue (mesuré selon DIN 67530) sous 20° est inférieur à 40.

9. Utilisation selon la revendication 8, **caractérisée en ce que** la surface revêtue présente une valeur $R_a$ supérieure à 100 nm.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0782932 A
- US 5430111 A
- EP 0769540 A
- EP 0620245 A

**In der Beschreibung aufgeführte Nicht-Patentliteratur**

- **HANSL LOOS.** Farbmessung. Verlag Beruf und Schule, 1989